# EUROPEAN PATENT APPLICATION

(11) **EP 1 645 438 A2**
(43) Date of publication of application: **12.04.2006**
(21) Application number: 05256015.8
(22) Date of filing: 27.09.2005
(51) Int. Cl.: B60B 29/00

(54) **Wheel hub lifting apparatus**

(30) Priority: 08.10.2004 GB 0422351
(71) Applicant: Sanders, Philip Rex, Codsall Wolverhampton West Midlands WV8 1EN (GB)
(72) Inventor: Sanders, Philip Rex, Codsall Wolverhampton West Midlands WV8 1EN (GB)
(74) Representative: Jackson, Derek Charles

(57) **Abstract**

A wheel hub lifting apparatus comprising an attachment member (3) adapted for attaching the apparatus to a wheel of a vehicle and a support means (11) comprising pivot means (39) and a receiving member (45) adapted for use with a lifting device. The pivot means (39) enables the support means (11) to pivot relative to the attachment member (3). The receiving member (45) is positioned, in use, at a level above the pivot means (39).

## Description

This invention relates to a wheel hub lifting apparatus.

A large proportion of vehicles, particularly autobuses and coaches, have a trim or skirt around the lower portion of the vehicle body extending close to the ground, for example to improve aerodynamics and/or aesthetic appearance.

The skirt reduces the clearance between the vehicle and the ground. Such clearance is also decreased due to the use of relatively lower suspension systems and low profile tyres.

When the tyre of a vehicle with reduced clearance has a puncture, especially if the tyre is towards the front of the vehicle, there is very little clearance between the skirt and the ground, and/or between the wheel axle of the punctured tyre and the ground. As such, it is substantially impossible to insert a trolley or bottle jack beneath the vehicle in order to raise the vehicle to enable a wheel to be removed for the replacement or repair of the punctured tyre.

A lifting device to assist in the removal of a punctured tyre is known. The lifting device is affixed to a wheel by a proportion of the wheel studs provided on the wheel. The device is held in place on the wheel by suitable fasteners.

The device has a rigid plate-like strut which, in use, extends outwardly from the wheel, substantially parallel with the ground.

A bottle jack is positioned beneath the device with the top of the jack abutting the extending strut of the device. The ram of the jack is extended to raise the device relative to the ground, and thus raise the wheel hub of the vehicle. When the wheel has been raised sufficiently, the wheel axle is supported such that the wheel and device can be removed.

As the jack is extended and the vehicle is raised, the known lifting device can tend to pivot on the top of the jack which can lead to instability and the risk of the jack slipping out from under the device. Such slippage would result in the raised vehicle suddenly falling back to the ground. The above problems are clearly a concern, at least from a health and safety point of view.

There is a need, therefore, for an apparatus for efficiently and safely lifting a hub of a wheel of a vehicle.

It is therefore an object of the present invention to provide a wheel hub lifting apparatus which overcomes or minimises these problems.

According to the present invention there is provided a wheel hub lifting apparatus comprising: an attachment member adapted for attaching the apparatus to a wheel of a vehicle; and a support means comprising pivot means enabling the support means to pivot relative to the attachment member and a receiving member adapted for use with a lifting device, the receiving member being positioned, in use, at a level above the pivot means.

The pivot means may have an axis substantially perpendicular to an axle of the wheel.

The axis of the pivot means may be arranged such that, in use, it is substantially horizontal.

The receiving member of the support means may be adapted to accommodate an end of the lifting device.

The support means may be provided with reinforcing members adapted to strengthen the support means.

The attachment member may include attachment means in the form of a plurality of fixing apertures arranged to correspond to attachment points on the wheel of the vehicle.

The attachment member may be of plate form, preferably elongate plate form.

The attachment member may be provided with an indentation in a side region thereof. The indentation enables the attachment member to be positioned against a wheel without interference being caused by other wheel features.

The attachment member may be provided substantially centrally with an aperture. Such an aperture serves to reduce the weight of the attachment member and/or to enable protruding features on the wheel to pass through the attachment member.

Wing members may extend from the attachment member.

The wing members may extend in a direction substantially parallel to an axle of the wheel and may, in use, extend substantially vertically.

The wing members may be provided with elongate slots arranged to receive the pivot means of the support means.

The slots may be enclosed such that the removal of the pivot means from the slots is prevented.

Alternatively, the slots may be provided with an aperture arranged for the removal of the pivot means from the slots. The lower region of the aperture may be in the form of an upwardly curving lip. Such a lip prevents the pivot means sliding downwardly out of the slots.

The apparatus may be portable. Handle means may be provided to facilitate positioning and carrying of the apparatus. The handle means may be in the form of an elongate handle member extending between the wing members. In addition, or alternatively, handle means may be provided in the form of recesses or slots provided in the wing members.

For a better understanding of the present invention and to show more clearly how it may be carried into effect reference will now be made, by way of example, to the accompanying drawings in which:
Figure 1 is an exploded perspective view of a first embodiment of a wheel hub lifting apparatus according to the present invention;
Figure 2 is a perspective view of the apparatus for lifting a wheel hub in Figure 1 in an assembled arrangement;
Figure 3 is a perspective view of the apparatus for lifting a wheel hub in Figure 1 and 2 attached to a wheel;
Figure 4 is a series of views of the apparatus for lifting a wheel hub in use;
Figure 5 is a perspective view of a second embodiment of an apparatus for lifting a wheel hub in accordance with the present invention attached to a wheel; and
Figure 6 is a perspective view of part of an apparatus for lifting a wheel hub in accordance with the present invention provided with handle means.

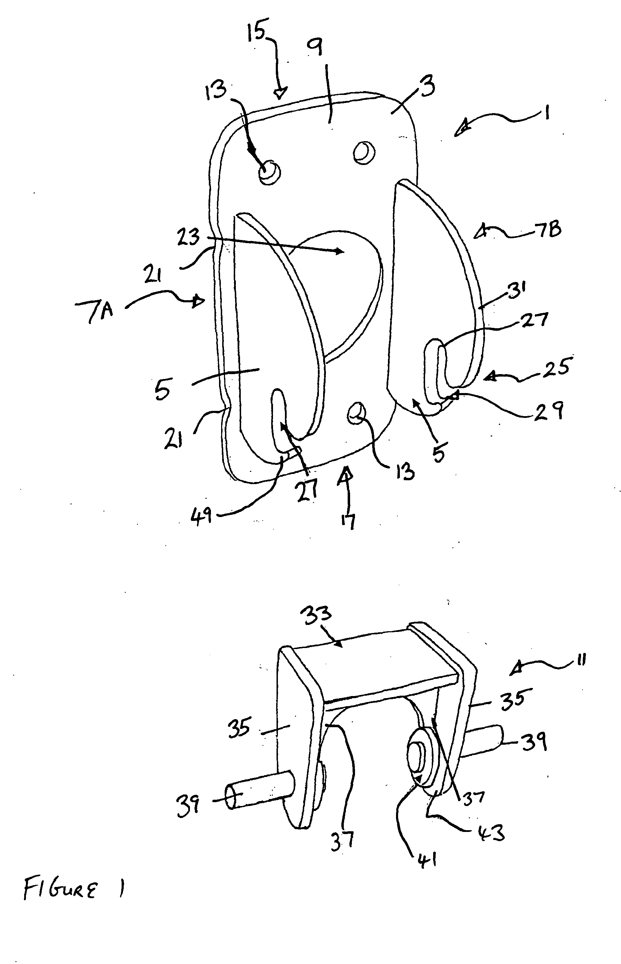

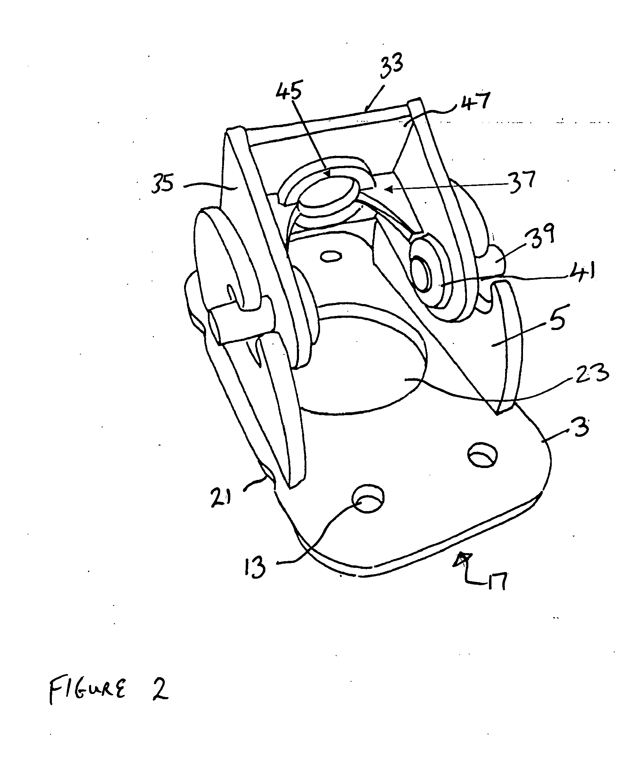

Figures 1 and 2 show a first embodiment of a wheel hub lifting apparatus 1 according to the present invention. The apparatus 1 for lifting a wheel hub of a vehicle comprises an elongate plate-like attachment member 3, a pair of extension wings 5, and support means in the form of a support assembly 11.

The apparatus 1 is, for example, made from high density mild steel.

The plate-like attachment member 3 is provided with a plurality of attachment means in the form of four fixing apertures 13 arranged such that two fixing apertures are provided in an edge region 15, uppermost in use, of the attachment member 3 and two fixing apertures are provided in an edge region 17, lowermost in use, of the attachment member 3.

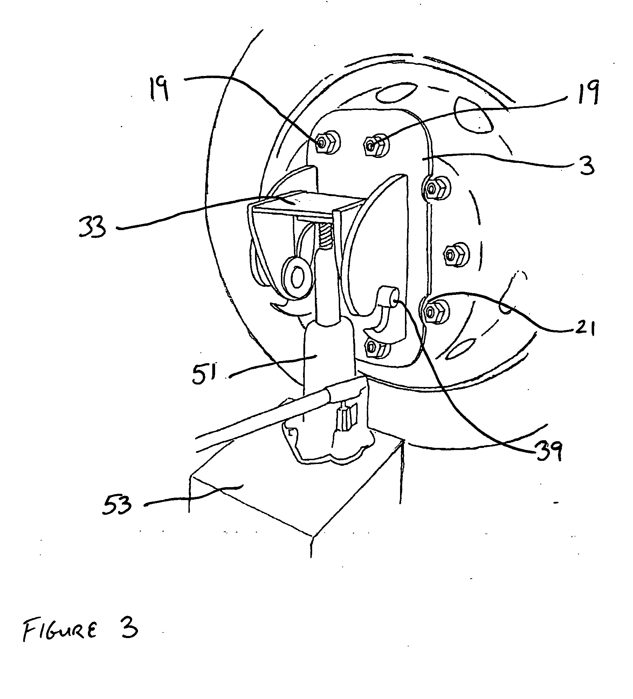

The fixing apertures 13 are arranged to be positioned complementary to the standard position of four wheel studs 19 provided on a wheel axle for securing a wheel to a vehicle (as shown in Figure 3).

Indentations 21 are provided in the edges of opposite sides 7A, 7B of the attachment member 3 to enable the attachment member to be positioned against a wheel without interference being caused by other wheel studs or fasteners on the wheel studs 19, as shown in Figure 3.

To reduce the weight of the attachment member 3, an aperture 23 is provided substantially centrally of the member 3. The size of the aperture 23 is sufficiently large to remove unnecessary material in order to reduce the weight of the member without significantly reducing the strength of the member.

The aperture 23 also enables the attachment member 3 to be affixed to a wheel to be lifted, whilst allowing any protruding wheel bearing assembly which may be present on the wheel to extend through the attachment member.

The extension wings 5 are provided on a front face 9 of the attachment member 3. The extension wings 5 are rigidly secured, for example by welding, to opposite sides 7A, 7B of a front face 9 of the attachment member 3. The extension wings 5 are in the form of elongate arcuate plates extending in a direction substantially parallel to an axle of the wheel and, in use, extend substantially vertically, as shown in Figures 1 and 3.

Provided in a lower region 25 of each extension wing 5 is an elongate slot 27. Each elongate slot 27 extends in the longitudinal direction of the attachment member 3 with a cut-out section 29 provided in a lower region of the slot connecting the slot 27 to a front edge 31 of the wing 5. The lower portion of each slot 27 is in the form of an upwardly extending lip 49.

The support assembly 11 comprises an inverted "U" shaped arrangement of a top plate 33 and two side plates 35 rigidly secured to opposite sides of the top plate, for example by welding. A reinforcing member 37 (shown in Figures 1 and 2) is provided between each side plate 35 and the top plate 33 to increase the strength of the inverted "U" shaped arrangement.

A cylindrical axle 39 extends outwardly from an outer face of each side plate 35. Each axle 39 passes through the side plate 35 and is supported on an inner face 43 of each side plate 35 by means of an axle support ring 41. Each axle 39, side plate 35 and support ring 41 arrangement is rigidly secured together, for example by welding. The axles 39 act as pivot means for the support assembly.

As shown in Figure 2, a receiving member 45 is provided on an inner face 47 of the top plate 33. The receiving member 45 is preferably circular and is dimensioned to receive a head of a lifting device, for example a bottle jack.

The axles 39 of the support assembly 11 are pivotably supported by the extension wings 5 of the attachment member such that the pivot axis of the axles 39 is substantially perpendicular to an axle of the wheel and, in use, it is substantially horizontal.

The axles 39 of the support assembly 11 are dimensioned so as to be received within the cut-out sections 29 and the slots 27 of the extension wings 5 of the attachment member 3 (as shown in Figures 2, 3 and 4). The lip portions 49 of the slots prevent the axles 39 from sliding downwardly in use out of the slots 27. As such, in use, the support assembly can only be removed from the slots by lateral movement of the axles through the cut-out sections 29.

The arrangement of the axles 39 of the support assembly 11 within the slots 27 of the extension wings 5 enables the support assembly 11 to pivot through substantially 180 degrees relative to the attachment member 3.

When the apparatus 1 is not in use, the support assembly 11 can be separated from the wings 5 of the attachment member 3 to facilitate transportation and storage of the apparatus.

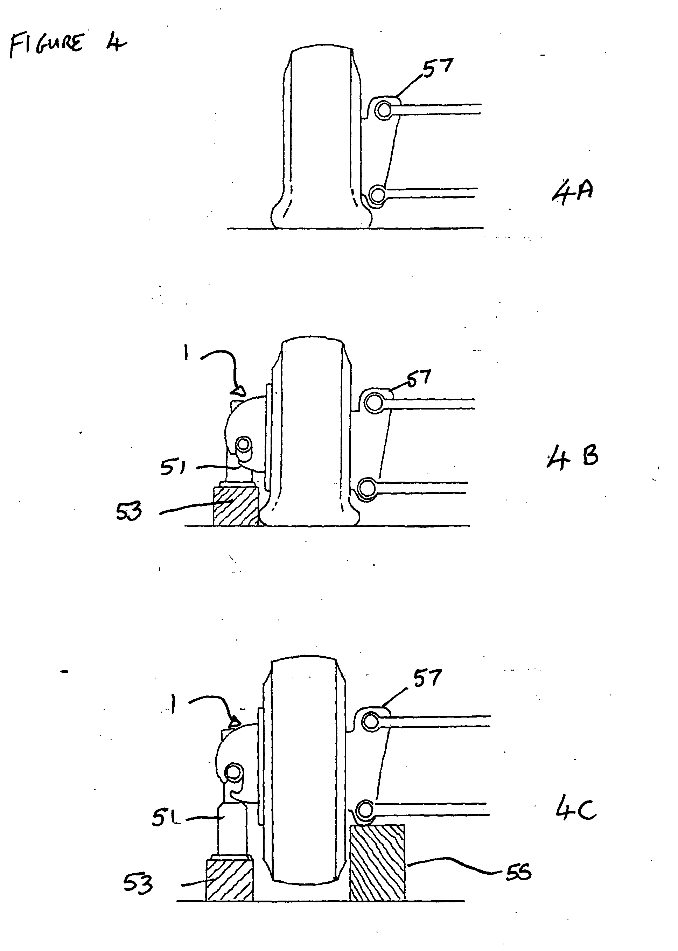

Figures 3 and 4 show an apparatus 1 for lifting a wheel hub in accordance with the present invention in use.

Figure 4A shows a wheel with a puncture. The apparatus 1 for lifting a wheel hub is attached to the wheel by means of a proportion of the screw-threaded wheel studs 19, provided on the vehicle axis to hold the wheel in position, passing through the fixing apertures 13 in the attachment member 3. The apparatus is releasibly secured in place on the wheel studs by screw-threaded fasteners, for example bolt nuts (see Figure 3).

The support assembly 11 is pivoted in the slots 27 of the extension wings 5 such that the top plate 33 is positioned at a level above the axles 39, as shown in Figure 3.

A lifting device 51, preferably an hydraulic bottle jack, is positioned beneath the support assembly 11. The head of an extendable ram of the hydraulic jack 51 is positioned within the receiving member 45 on the inner face 47 of the top plate 33. If required, a block 53, for example of wood, can be positioned between the base of the jack 51 and the ground to provide additional height prior to extension of the ram of the jack 51 (see Figures 3 and 4B).

The ram of the jack 51 is extended, exerting pressure on the inner face 47 of the top plate 33 of the support assembly 11. Continued extension of the ram of the jack 51 initially causes the axles 39 of the support assembly 11 to be raised within the slots 27 of the extension wings 5. Once the axles 39 reach the top of the slots 27, the pressure exerted by continued extension of the ram is applied to the extension wings 5 and thus to the attachment member 3 of the apparatus 1. Such exerted pressure causes the wheel, to which the apparatus 1 is attached, to be forced away from the ground and thus the hub of the wheel is raised away from the ground (see Figure 4C).

As the hub is raised, the alignment between the attachment member 3 and the vertical axis of the ram of the jack 51 changes. However, any such change in alignment is compensated for by the support assembly 11 being able to pivot relative to the attachment member 3. Such pivoting of the support assembly results in the head of the extendable ram remaining substantially flat against the inner face of the top plate 33. Such pivoting substantially prevents the possibility of the jack 51 slipping away from the wheel.

When sufficient clearance has been generated by the pressure exerted by the jack 51 against the wheel hub lifting apparatus 1, a vehicle axle support means 55, for example a block, axle stand or second lifting device, can be placed beneath the axle 57 of the wheel that has been raised, as shown in Figure 4C.

When the vehicle axle support means is in place the jack 51 can be removed, along with the wheel hub lifting apparatus 1, and the damaged wheel can be removed for repair or replacement.

Figure 5 shows a second embodiment of a wheel hub lifting apparatus 1 according to the present invention. The second embodiment comprises essentially the same features as the first embodiment except that the slots 27 in the extension wings 5 do not have cut-out sections connecting the slots 27 to the edge of the wings 5. The slots are instead fully enclosed.

The axles 39 of the support assembly 11 are provided within the enclosed slots 27. As such, the support assembly 11 cannot be detached from the wings 5 of the attachment member 3.

An advantage of the axles 39 being retained with the slots 27 is that the support assembly cannot become inadvertently detached from the attachment member leading to possible loss.

The method of use of the second embodiment is the same as that described for the first embodiment.

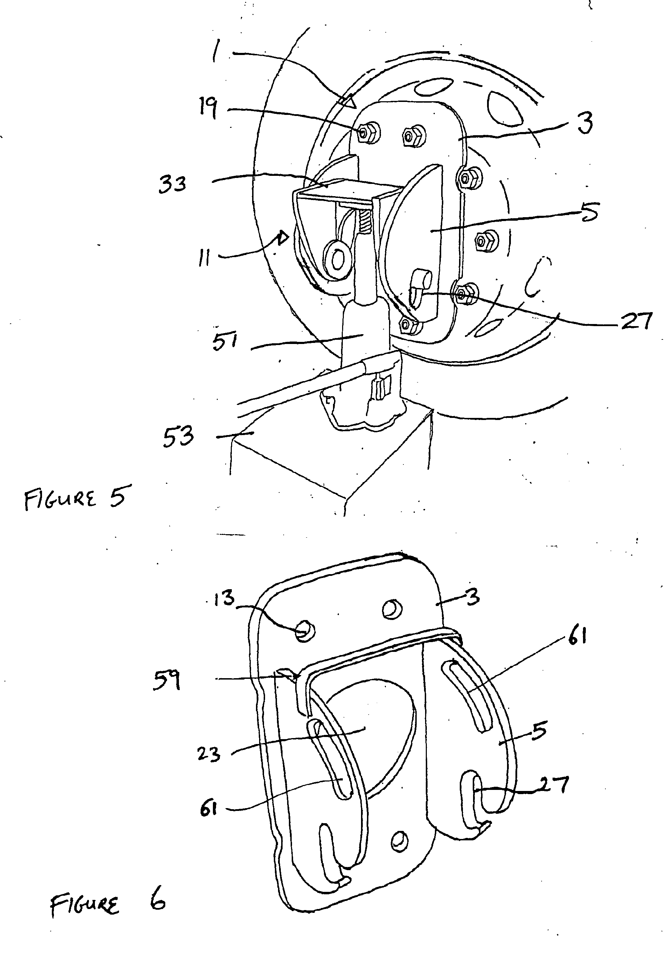

Wheel hub lifting apparatus in accordance with the present invention is arranged to be portable. To this end, a handle means 59 can be provided, for example, in the form of an elongate inverted "U" shaped handle member connected to the upper portions of the extension wings 5 to facilitate carrying and positioning of the wheel hub lifting apparatus, as shown in Figure 6.

In addition, or alternatively, handle means may be provided in the form of slots 61 provided through, for example, upper regions of the wing members as shown in Figure 6. Such slots would also reduce the weight of the apparatus.

Although handle means in the form of slots 61 passing through the wing members are shown in Figure 6, it should be appreciated that handle means could be provided in the form of, for example, shallow recesses in the outwardly facing sides of the wings.

Although the attachment member 3 has been described hereinbefore as being elongate, it should be appreciated that an attachment member of a wheel hub lifting apparatus in accordance with the present invention could have other shapes, for example square or circular.

## Claims

1. A wheel hub lifting apparatus (1) **characterised by** comprising: an attachment member (3) adapted for attaching the apparatus to a wheel of a vehicle; and a support means (11) comprising pivot means (39) enabling the support means (11) to pivot relative to the attachment member (3) and a receiving member (45) adapted for use with a lifting device, the receiving member (45) being positioned, in use, at a level above the pivot means (39).

2. An apparatus as claimed in claim 1, **characterised in that** the pivot means (39) has an axis substantially perpendicular to an axle of the wheel, for example the axis of the pivot means (39) is arranged such that, in use, it is substantially horizontal.

3. An apparatus as claimed in claim 1 or 2, **characterised in that** the receiving member (45) of the support means (11) is adapted to accommodate an end of the lifting device.

4. An apparatus as claimed in claim 1, 2 or 3, **characterised in that** the support means (11) is provided with reinforcing members (37) adapted to strengthen the support means (11).

5. An apparatus as claimed in any preceding claim, **characterised in that** the attachment member (3) includes attachment means in the form of a plurality of fixing apertures (13) arranged to correspond to attachment points on the wheel of the vehicle.

6. An apparatus as claimed in any preceding claim, **characterised in that** the attachment member (3) is of plate form, preferably elongate plate form.

7. An apparatus as claimed in any preceding claim, **characterised in that** the attachment member (3) is provided with an indentation (21) in a side region thereof.

8. An apparatus as claimed in any preceding claim, **characterised in that** the attachment member (3) is provided substantially centrally with an aperture (23).

9. An apparatus as claimed in any preceding claim, **characterised in that** wing members (5) extend from the attachment member (3), for example in a direction substantially parallel to an axle of the wheel, and preferably, in use, extend substantially vertically.

10. An apparatus as claimed in claim 9, **characterised in that** the wing members (5) are provided with elongate slots (27) arranged to receive the pivot means (39) of the support means (11).

11. An apparatus as claimed in claim 10, **characterised in that** the slots (27) are enclosed such that the removal of the pivot means (39) from the slots (27) is prevented.

12. An apparatus as claimed in claim 10, **characterised in that** the slots (27) are provided with an aperture (29), for example with a lower region in the form of an upwardly curving lip (49), arranged for the removal of the pivot means (39) from the slots (27).

13. An apparatus as claimed in any preceding claim, **characterised in that** the apparatus is portable, for example handle means (59) is provided to facilitate positioning and carrying of the apparatus.

14. An apparatus as claimed in claim 13, **characterised in that** the handle means (59) is in the form of an elongate handle member extending between the wing members (5) and/or the handle means (59) is provided in the form of recesses or slots provided in the wing members (5).
